(19) Europäisches Patentamt
European Patent Office
Office européen des brevets

(11) **EP 4 550 814 A1**

(12) **EUROPEAN PATENT APPLICATION**
published in accordance with Art. 153(4) EPC

(43) Date of publication:
**07.05.2025  Bulletin 2025/19**

(21) Application number: **23830840.7**

(22) Date of filing: **10.05.2023**

(51) International Patent Classification (IPC):
**H04N 23/54** *(2023.01)*    **H04N 23/60** *(2023.01)*

(52) Cooperative Patent Classification (CPC):
**H04N 23/54; H04N 23/60**

(86) International application number:
**PCT/JP2023/017598**

(87) International publication number:
**WO 2024/004388 (04.01.2024 Gazette 2024/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:  **29.06.2022   JP 2022105081**

(71) Applicant: **Sony Semiconductor Solutions Corporation**
**Atsugi-shi, Kanagawa 243-0014 (JP)**

(72) Inventor: **ITAGAKI, Keiichi**
**Atsugi-shi, Kanagawa 243-0014 (JP)**

(74) Representative: **Müller Hoffmann & Partner Patentanwälte mbB**
**St.-Martin-Straße 58**
**81541 München (DE)**

(54)  **SOLID-STATE IMAGING DEVICE**

(57)  An image including high-accuracy multi-wavelength information is acquired by a device that is compact and inexpensive.

A solid-state imaging device includes a sensor and a signal processing circuit. Light-receiving elements are included in a two-dimensional array along a first direction and a second direction intersecting the first direction, and a plurality of regions is arranged in which the regions are arranged along the first direction and respectively receives light beams having different wavelengths or light beams having different wavelengths are respectively incident on the regions. The signal processing circuit acquires an image in which information on an object moving along the second direction is corrected on the basis of signals acquired in the light-receiving elements to which each region of the plurality of regions belongs.

*FIG. 1*

## Description

TECHNICAL FIELD

The present disclosure relates to a solid-state imaging device or a solid-state imaging system.

BACKGROUND ART

Image sensors that capture an image of multi-wavelength information, such as multispectral cameras and hyperspectral cameras, are utilized in a wide range of fields. For example, in the agricultural field, application is widely considered in a situation where it is difficult for human eyes to observe, such as giving water, a fertilizer, or a pesticide to a necessary place at an appropriate timing, a defect inspection in a factory or a plant, or the like. For example, indices such as a normalized difference water index (NDWI) and a normalized difference vegetation index (NDVI) in the agricultural field can be acquired from multi-wavelength information on the basis of an image with high reflectance and an image with low reflectance in water, vegetation, or the like.

However, at present, equipment such as a conventional hyperspectral camera is large and expensive, and research has been conducted, but actual introduction has not progressed much. In order to promote more efficient introduction, there is a demand for a means that is compact and inexpensively captures these images. Furthermore, if visible light region information and invisible light region information can be simultaneously acquired by one camera, images can be acquired at the same angle of view from these pieces of information, and a camera or a computer does not need pixel unit alignment or the like, and calculation becomes easy; however, in the present situation where a plurality of cameras is required as described above, implementation of this is also difficult.

CITATION LIST

PATENT DOCUMENT

Patent Document 1: Japanese Patent Application Laid-Open No. 2013-238579

SUMMARY OF THE INVENTION

PROBLEMS TO BE SOLVED BY THE INVENTION

Thus, the present disclosure provides a solid-state imaging device or a solid-state imaging system that is compact and inexpensively acquires an image including high-accuracy multi-wavelength information.

SOLUTIONS TO PROBLEMS

According to an embodiment, a solid-state imaging device includes a sensor and a signal processing circuit. The sensor includes light-receiving elements in a two-dimensional array along a first direction and a second direction intersecting the first direction, and a plurality of regions is arranged, in which the regions are arranged along the first direction and respectively receives light beams having different wavelengths or light beams having different wavelengths are respectively incident on the regions. The signal processing circuit acquires an image in which information on an object moving along the second direction is corrected on the basis of signals acquired in the light-receiving elements to which each region of the plurality of regions belongs.

The signal processing circuit may acquire an image in which a positional shift of the object along the second direction is corrected on the basis of captured images regarding wavelengths acquired from the plurality of regions.

A plurality of filters having transmission characteristics in different wavelength regions may be arranged along the first direction on a light-receiving surface side of the sensor to form the plurality of regions in the sensor.

The plurality of filters may be attachable to and detachable from the sensor.

In a light-receiving surface of the sensor, a region on which light through one of the plurality of filters is incident may be set as the plurality of regions.

The signal processing circuit may acquire the image in which the information on the object is corrected on the basis of a time difference in acquiring an identical region in the object in the plurality of regions.

The signal processing circuit may output an image for a wavelength of each of the plurality of regions corrected.

The signal processing circuit may calculate and output a predetermined index, from an image for a wavelength of each of the plurality of regions corrected.

The predetermined index may be a normalized difference water index (NDWI) or a normalized difference vegetable index (NDVI).

At least a region that receives a wavelength in a visible light region, a region that receives a wavelength in a near-infrared region, and a region that receives a wavelength in a short wavelength infrared region may be included as the plurality of regions.

The sensor and the signal processing circuit may be included in an identical chip.

According to an embodiment, a solid-state imaging system includes: the solid-state imaging device according to any of the above; and
a stage enabled to move an object in the second direction, in which an image of the object moving with the stage is captured by using the solid-state imaging device, and a captured image of the object for each wavelength is acquired.

A light source may be further included that emits light of a plurality of wavelengths to predetermined regions along the first direction, in which reflected light or transmitted light of the light emitted from the light source may be received in each region of the plurality of regions arranged in the sensor.

BRIEF DESCRIPTION OF DRAWINGS

Fig. 1 is a diagram schematically illustrating an example of a solid-state imaging system according to an embodiment.

Fig. 2 is a diagram schematically illustrating an example of a solid-state imaging element according to an embodiment.

Fig. 3 is a diagram illustrating an implementation example of the imaging element according to an embodiment.

Fig. 4 is a diagram illustrating an implementation example of the imaging element according to an embodiment.

Fig. 5 is a diagram illustrating an implementation example of the imaging element according to an embodiment.

Fig. 6 is a diagram illustrating an example of a mask according to an embodiment.

Fig. 7 is a diagram illustrating an example of a filter configuration according to an embodiment.

Fig. 8 is a diagram illustrating an example of the filter configuration according to an embodiment.

Fig. 9 is a diagram illustrating an example of a configuration of a mask and a pixel array according to an embodiment.

Fig. 10 is a diagram illustrating an example of ROI setting of a light-receiving region according to an embodiment.

Fig. 11 is a diagram illustrating an example of imaging of an object in each of light-receiving regions according to an embodiment.

Fig. 12 is a diagram illustrating an example of imaging of the object in each of the light-receiving regions according to an embodiment.

Fig. 13 is a diagram illustrating an example of imaging of the object in each of the light-receiving regions according to an embodiment.

Fig. 14 is a diagram illustrating an example of a configuration of the light-receiving region according to an embodiment.

Fig. 15 is a flowchart illustrating processing by a solid-state imaging device according to an embodiment.

Fig. 16 is a diagram schematically illustrating the solid-state imaging system according to an embodiment.

Fig. 17 is a diagram schematically illustrating the solid-state imaging system according to an embodiment.

MODE FOR CARRYING OUT THE INVENTION

Hereinafter, embodiments of the present disclosure will be described with reference to the drawings. The drawings are used for explanation, and the shape and size of each component in actual devices, the ratios of size to other components, and the like are not necessarily as illustrated in the drawings. Furthermore, since the drawings are illustrated in a simplified manner, it should be understood that components necessary for implementation other than those illustrated in the figure are provided as appropriate.

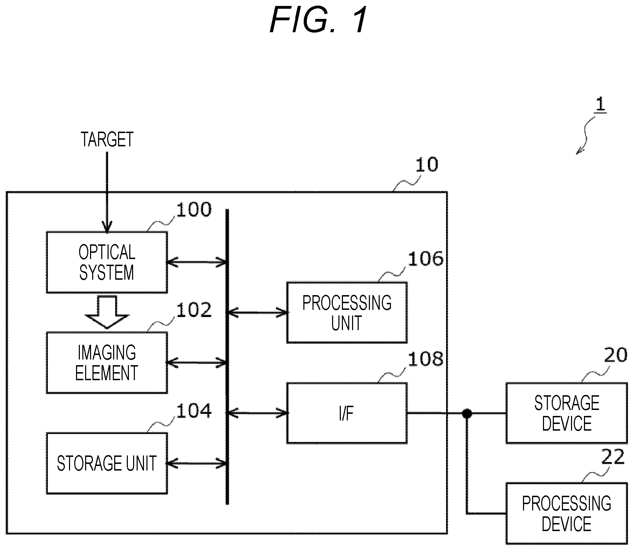

Fig. 1 is a block diagram schematically illustrating a solid-state imaging system according to an embodiment. A solid-state imaging system 1 includes a solid-state imaging device 10, a storage device 20, and a processing device 22. The solid-state imaging system 1 is a system that causes the processing device 22 to execute some processing on the basis of information acquired from the solid-state imaging device 10. As another example, the solid-state imaging system 1 may be a system that stores the information acquired from the solid-state imaging device 10 in the storage device 20.

Furthermore, the solid-state imaging device 10 may acquire and store information necessary for processing, or the solid-state imaging device 10 may perform appropriate processing and output a processing result. That is, one or both of the storage device 20 and the processing device 22 are not essential components, and the solid-state imaging system 1 may be formed by the solid-state imaging device 10, and processing by the solid-state imaging system 1 may be completed in the solid-state imaging device 10.

Furthermore, as the solid-state imaging system 1, a storage unit 104 in the solid-state imaging device 10 may operate as a first storage unit, and the storage device 20 may be included as a second storage unit. For example, in the case of performing processing such as execution of signal processing, image processing, or some machine learning, the solid-state imaging system 1 can use a processing circuit included in the solid-state imaging device 10, or the processing device 22 in the outside thereof, as a signal processing unit, an image processing unit, a learning unit, or an inference unit. The first storage unit may be included inside or outside the same chip including an imaging element 102 in the solid-state imaging device 10, for example.

That is, the first storage unit may be included inside the same chip including the imaging element 102, outside the same chip including the imaging element 102, or outside the imaging element 102. Furthermore, in a case where signal processing, image processing, learning, or inference is executed in the solid-state imaging device 10, a processing unit that performs the signal processing and image processing, a learning unit that performs learning, or an inference unit (including a processing circuit) that performs inference may be included inside the same chip including the imaging element 102, outside the same chip including the imaging element 102, or outside the imaging element 102.

Furthermore, the solid-state imaging device 10 itself may be formed as one chip. That is, the imaging element 102 and a processing unit 106 including a signal processing circuit may be formed as the same chip. In this case, the solid-state imaging system 1 may include an electronic device including an imaging device, such as a digital still camera or a smartphone terminal including the solid-state imaging device 10, and a storage area and a processing area different from the solid-state imaging device 10, the storage device 20, and/or the processing device 22, in the electronic device. These areas may be configured by an electronic circuit.

As described above, in the present disclosure, the solid-state imaging device 10 is a concept that can be grasped in a broad sense, such as either a semiconductor chip (camera module) or an electronic device (a device or a gadget having an imaging function) on which the semiconductor chip is mounted.

Furthermore, a storage device or a storage circuit may be included inside or outside the semiconductor chip in the solid-state imaging device 10. In summary, the storage device or the storage circuit in the present disclosure may be included on a chip forming a camera module, in the solid-state imaging device 10 outside the chip, or outside the solid-state imaging device 10 (including a file server or the like connected via a network).

The solid-state imaging device 10 includes an optical system 100, the imaging element 102, the storage unit 104, the processing unit 106, and an input/output interface (hereinafter, it is referred to as an I/F 108). As a non-limiting example, the solid-state imaging device 10 may include a light-receiving element enabled to receive visible light, near-infrared (NIR) light, and short wavelength infrared (SWIR) light, receive light in these bands to generate image data, and execute processing on the image data.

In Fig. 1, components of the solid-state imaging device 10 are connected to each other via a bus, but the present embodiment is not limited thereto, and the components may be electrically and directly connected to each other as appropriate.

The optical system 100 is arranged to receive light incident from the outside, for example, light reflected from a target, light transmitted through the target, or light emitted by the target, in light-receiving elements of the imaging element 102. The optical system 100 may include, for example, one or a plurality of lenses, changes, a diffraction grating, a filter, and the like. As some non-limiting examples, the optical system 100 may be enabled to acquire at least a plurality of types of bands of light in visible, NIR, SWIR, ultra violet (UV), or, as necessary, other bands. Each of the plurality of types of bands may be received by the imaging element 102 enabled to appropriately receive light in each band.

The imaging element 102 receives light in visible, NIR, and SWIR bands, for example, and generates image data. That is, the imaging element 102 includes, for example, a pixel including a photoelectric conversion element (light-receiving element) that receives light in these bands and outputs an analog signal, and a pixel circuit that converts an analog signal corresponding to the intensity of light output from the photoelectric conversion element into image data.

Note that, for example, the imaging element 102 may receive light in other bands instead of the above three bands (visible, NIR, and SWIR), or may include a pixel enabled to acquire multispectral or hyperspectral information received for more wavelength regions.

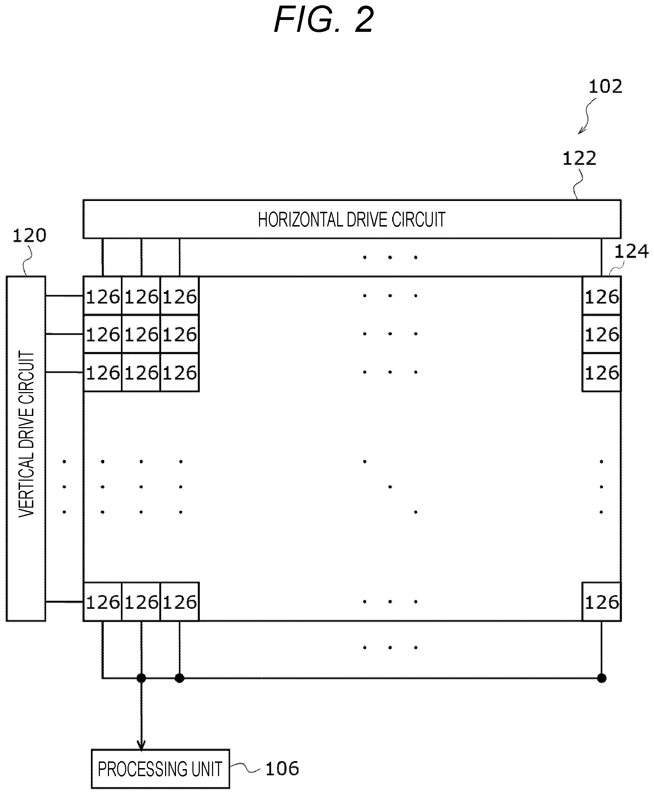

Fig. 2 is a block diagram schematically illustrating an example of an outline of the imaging element 102. The imaging element 102 includes a vertical drive circuit 120, a horizontal drive circuit 122, and a pixel array 124 (sensor).

The vertical drive circuit 120 is, for example, a circuit that controls driving of pixels along a line direction.

The horizontal drive circuit 122 is, for example, a circuit that controls driving of pixels along a column direction.

The pixel array 124 includes a plurality of pixels 126 in a two-dimensional (for example, the line direction that is a first direction and the column direction that is a second direction intersecting the line direction) array. The pixels 126 belonging to the same line are selected by the vertical drive circuit 120, and for the selected line, signals are transmitted from the pixels 126 to the processing unit 106 for respective columns under the control of the horizontal drive circuit 122. This transmission may be controlled using a line buffer.

An output from each pixel 126 is an analog signal, and the imaging element 102 may separately include an ADC (not illustrated) that converts the analog signal into a digital signal and an amplifier (not illustrated) that amplifies the signal, before transmitting the signal to the processing unit 106, or these types of processing may be executed in the processing unit 106.

Furthermore, the imaging element 102 may separately include a control circuit for controlling the vertical drive circuit 120 and the horizontal drive circuit 122. Operation of the imaging element 102 and configurations and operation of other circuits may be similar to those of a general solid-state imaging device, and thus detailed description thereof will be omitted.

The imaging element 102 transmits a signal based on the intensity of light received in the pixel 126 to the processing unit 106 under the control of the vertical drive circuit 120 and the horizontal drive circuit 122. The processing unit 106 executes processing on the basis of a received digital image signal or a digital image signal obtained by converting a received analog signal. As described above, the pixel 126 can receive, for example, light in the visible, NIR, and SWIR wavelength bands via the optical system 100, and the imaging element 102 can acquire information regarding these bands as image information.

Returning to Fig. 1, the storage unit 104 stores data necessary in the solid-state imaging device 10. In the solid-state imaging device 10, in a case where information processing by software is specifically implemented by using hardware resources, the storage unit 104 may store a program, an execution file, and the like necessary for the information processing by the software. The storage unit 104 may have a circuit configuration in which at least a part includes a semiconductor, and may be a volatile or nonvolatile memory or storage.

The processing unit 106 executes appropriate signal processing and image processing on the signal acquired from the imaging element 102, and executes subsequent processing on image data stored in the storage unit 104. Specifically, as described above, the processing unit 106 may perform processing of appropriately converting a signal output from the imaging element 102 into image data. In the present disclosure, the processing unit 106 have a configuration enabled to implement some processing using a model at least.

For example, a part of the processing unit 106 may be an analog circuit. The processing unit 106 may include a digital circuit enabled to process digital image data. The processing unit 106 may include a signal processing circuit as a non-limiting example. This signal processing circuit may in particular includes an image processing circuit. These types of processing may be implemented by the processing unit 106 acquiring a program or the like stored in the storage unit 104.

In a case where inference processing is executed in the processing unit 106, a model used for inference may be a learned model optimized by machine learning including deep learning. In this case, the processing unit 106 may acquire a result by forming a model on the basis of parameters of the model stored in the storage unit 104 and inputting image data to the formed model. The model may be, for example, a learned model that makes some determination on a target included in the image data. More specifically, the model may be, for example, a model that operates as a determiner that determines normality/abnormality, a model that operates as a classifier that classifies an input image or a target such as an object in the image, or a model that executes some processing on the input image.

The processing unit 106 may output processed information to the outside via the I/F 108. The I/F 108 is an interface for inputting and outputting information between the inside and the outside of the solid-state imaging device 10.

As a non-limiting example, in a case where the solid-state imaging device 10 is one semiconductor chip, a selector that selects data to be output may be separately included. The data processed by the processing unit 106 may be output to, for example, the storage device 20 or the processing device 22 in the outside via the I/F 108. Moreover, the I/F 108 may perform output such as displaying the image data processed by the processing unit 106 on a display, or may receive information from an input device such as a button, a touch panel, or a mouse and output a control signal to the solid-state imaging device 10 to a control unit or the processing unit 106.

As another non-limiting example, in a case where the solid-state imaging device 10 is a device such as a digital camera, the I/F 108 may be a concept including a user interface. That is, the I/F 108 itself may include an output interface such as a display or an input interface such as a touch panel.

In any case, the I/F 108 may include a network interface that connects to an external network. In this case, the solid-state imaging device 10 can be connected to the external network via the I/F 108 via a wired or wireless means. The solid-state imaging device 10 may be connected to the storage device 20 or the processing device 22 in the outside via a network by the wired or wireless means.

The storage device 20 is a device for storage, such as a memory or a storage present outside the solid-state imaging device 10. The information processed in the solid-state imaging device 10 may be temporarily or non-temporarily stored in the storage device 20 via the I/F 108.

The processing device 22 is a device that is present outside the solid-state imaging device 10 and for executing some processing. The processing device 22 may be, for example, a device included in a system that determines moisture or vegetation in a farm or the like or controls processing on the basis of the moisture or vegetation, a factory automation system in a factory or the like, a system that performs inspection in any place or processing based on the inspection, or the like, or may be a device that executes at least some processing in various situations.

As another non-limiting example, the processing device 22 may be a device that executes processing based on image data acquired by the solid-state imaging device 10 or data obtained by executing any processing on the image data, outside the solid-state imaging device 10.

As a non-limiting example, in a case where the solid-state imaging device 10 is one semiconductor chip, the storage device 20 and the processing device 22 may be a storage circuit and a processing circuit included together with the solid-state imaging device 10 inside a device such as a digital camera including the solid-state imaging device 10. That is, a device such as a digital camera may include the solid-state imaging device 10, the storage device 20, and the processing device 22, and the solid-state imaging system 1 may include the device such as the digital camera. In this case, it is not excluded that the solid-state imaging device 10, the storage device 20, and the processing device 22 are further connected to an external device or network.

As a non-limiting example, the solid-state imaging device 10 may be a device such as a digital camera.

In this case, the solid-state imaging device 10 operates as one digital camera or the like that transmits and receives data to and from the storage device 20 and the processing device 22 outside the solid-state imaging device 10 in the solid-state imaging system 1 via the I/F 108.

In the above description, the digital camera or the like is a broad concept including, for example, any of a digital still camera that acquires a still image, a digital video camera that acquires a moving image, and a device having both functions.

(Configuration Example of Semiconductor Chip)

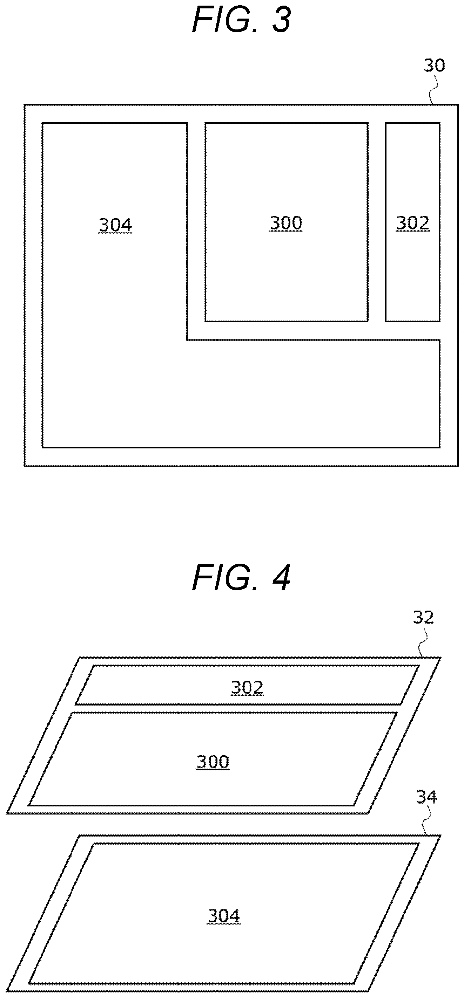

Fig. 3 is a diagram illustrating a non-limiting example of a semiconductor chip on which at least a part of the solid-state imaging device 10 is mounted. A substrate 30 includes a pixel region 300, a control circuit 302, and a logic circuit 304. As illustrated in Fig. 3, the pixel region 300, the control circuit 302, and the logic circuit 304 may be included on the same substrate 30.

The pixel region 300 is, for example, a region in which the pixel array 124 described above and the like are included. The pixel circuit and the like may be appropriately included in the pixel region 300, or may be included in another region (not illustrated) in the substrate 30.

The control circuit 302 includes a control unit. The control circuit 302 may include, for example, the vertical drive circuit 120, the horizontal drive circuit 122, or the control circuit described above, as a part thereof.

The logic circuit 304 performs processing on, for example, the digital signal output from the pixel circuit and converted by the ADC. As described above, the substrate 30 may include a storage circuit (not illustrated), and the logic circuit 304 may process data stored in the storage circuit.

At least a part of operation of the processing unit 106 may be implemented by the logic circuit 304. Furthermore, at least a part of the processing unit 106 may be mounted not on this chip but on another signal processing chip included at a location different from the substrate 30, or may be mounted in another processor.

Fig. 4 is a diagram illustrating a non-limiting example of the semiconductor chip on which at least a part of the solid-state imaging device 10 is mounted. As substrates, a first substrate 32 and a second substrate 34 are included. The first substrate 32 and the second substrate 34 have a stacked structure, and can transmit and receive signals to and from each other by appropriately connecting via holes, micro-bumps, or copper wires to each other in the respective substrates.

For example, the first substrate 32 may include the pixel region 300 and its peripheral circuit, and the second substrate 34 may include a circuit that implements other signal processing.

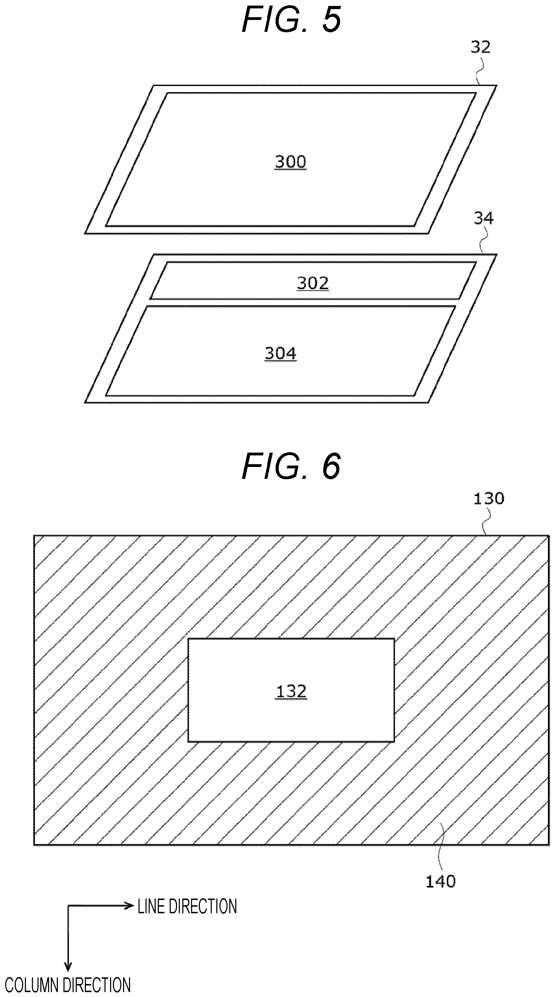

Fig. 5 is a diagram illustrating a non-limiting example of the semiconductor chip on which at least a part of the solid-state imaging device 10 is mounted. As the substrates, the first substrate 32 and the second substrate 34 are included. The first substrate 32 and the second substrate 34 similarly have a stacked and appropriately electrically connected structure as described above.

The imaging element 102, the storage unit 104, the processing unit 106, and the I/F 108 described above may be included in the chips illustrated in Figs. 3 to 5. With such a semiconductor chip, it is also possible to complete processing from imaging to temporary or non-temporary storage of data, processing using a model, and output of a processing result, in one chip.

Note that the present embodiment is not limited to these examples, and for example, the solid-state imaging device 10 may be formed as a structure in which a third substrate for a storage area is included between the first substrate and the second substrate or on an opposite side of the second substrate from the first substrate, and these three substrates are appropriately connected together and stacked.

A plurality of stacked substrates can be stacked and formed by any method, for example, chip on chip (CoC), chip on wafer (CoW), or wafer on wafer (WoW), or the like. In the present disclosure, as described above, in the pixel region 300, for example, pixels that receive light in at least visible, NIR, and SWIR bands may be included, and these semiconductor chips may be formed.

In the following, an example of finally acquiring an NDWI and an NDVI will be described, but an application range of the present disclosure is not limited thereto, and can be applied as at least a part of means for acquiring any information from information in multi-wavelength band information.

(First Embodiment)

Fig. 6 is a diagram illustrating an example of a mask applied to the pixel array 124 according to an embodiment.

A mask 130 includes a filter portion 132 and a light-shielding portion 140. For example, the mask 130 is arranged so as to cover a light-receiving surface side of the pixel array 124. As an example, the mask 130 may be bonded to the light-receiving surface side of the pixel array 124 by any means that appropriately transmits light controlled for each wavelength in the filter portion 132.

Furthermore, as another example, the mask 130 may be attached to and detached from an image sensor in a form of an attachment. By adopting a form in which the mask 130 can be attached, processing in the present disclosure can be simply executed without performing processing in a process stage of the image sensor.

As still another example, for the mask 130, the filter portion 132 and the light-shielding portion 140 may be formed on a light-receiving surface of the photoelectric conversion element in a pre-process for the image sensor. In this case, although diversion of the image sensor to other applications is somewhat limited, it is possible to implement dedicated and more accurate processing for implementing photoelectric conversion for acquiring an image from a plurality of bands.

That is, the mask 130 including a filter that transmits light in a desired band can be arranged, for example, in place of a seal glass by removing the seal glass included on the light-receiving surface side of the pixel array 124, can be arranged by being attached to the upper surface of the seal glass or in another fixed form, or can be arranged as a filter and a light shielding filter on the light-receiving surface side of the photoelectric conversion element in a form of being incorporated in the pixel array 124. As described above, arrangement of the mask 130 can be implemented by any means.

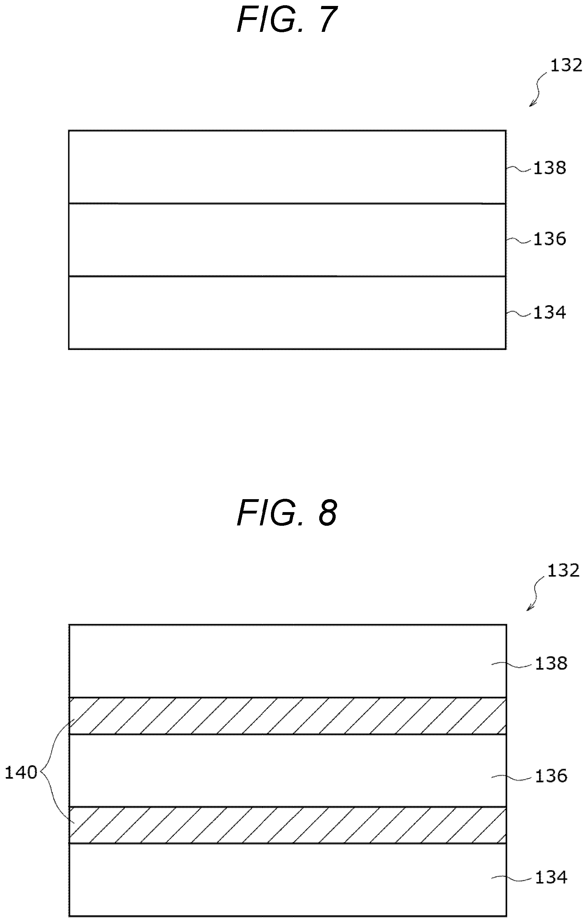

Fig. 7 is a top view illustrating an example of the filter portion according to an embodiment.

The filter portion 132 includes, for example, a first filter 134 that transmits light in a visible band, a second filter 136 that transmits light in an NIR band, and a third filter 138 that transmits light in an SWIR band. Note that a combination of the filters is not limited thereto. Furthermore, filters having four or more different transmission characteristics may be similarly included.

For example, in order to acquire information in a plurality of bands in the visible band, the filter portion 132 may include a filter that transmits light in a plurality of different bands in the visible band. This similarly applies to the NIR band and the SWIR band. That is, the filter portion 132 may include a filter that transmits light in a plurality of different NIR bands and/or a filter that transmits light in a plurality of different SWIR bands.

Fig. 8 is a diagram illustrating a configuration of another example of the filter portion according to an embodiment. As illustrated in Fig. 8, the filter portion 132 may further include a light-shielding portion 140 between the first filter 134 and the second filter 136 and between the second filter 136 and the third filter 138.

For example, in a case where the mask 130 is arranged so as to be attachable to the light-receiving surface side of the pixel array 124, there is a possibility that there is a gap between the filter portion 132 and the light-receiving surface of the pixel array 124. In such a case, in the pixel array 124, for example, there is a possibility that there is a photoelectric conversion element that receives both light transmitted through the first filter 134 and light transmitted through the second filter 136.

As illustrated in Fig. 8, the filter portion 132 can reduce the number of such pixels 126 on which light is incident via the plurality of filters, by arranging the light-shielding portion 140 between the filters.

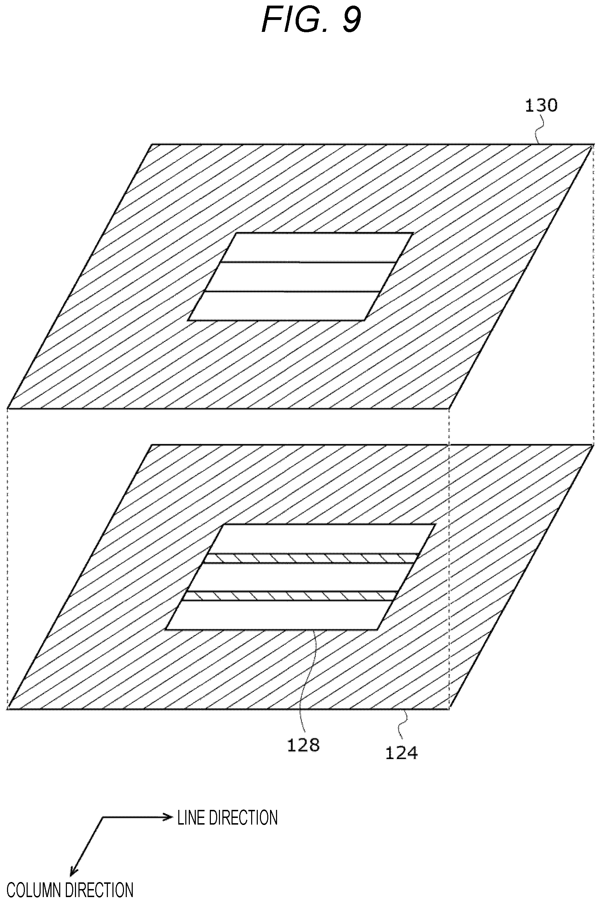

Fig. 9 is a diagram illustrating a state in which the mask is arranged with respect to the pixel array. In this figure, for the sake of explanation, there is a wide gap between the pixel array 124 and the mask 130, but actually, the pixel array 124 and the mask 130 may be in close contact with each other, in a state close to close contact, or in a state of being separated from each other by a sufficiently small distance with respect to areas of the pixel array 124 and the mask 130.

The filter portion 132 of the mask 130 is divided into, for example, three regions. In the regions, the filter portion 132 respectively includes filters having different wavelength transmission characteristics.

As for light beams reaching the pixel array 124 via the filters, light beams transmitted through a region other than the light-shielding portion 140 are received in a light-receiving region 128, mixed at boundary portions as in regions indicated by oblique lines rising to the left, and incident on the pixels 126. For this reason, in the regions, it is difficult to receive light in a desired wavelength band. For this reason, in the present disclosure, a region of interest (ROI) is defined so as not to be affected by these boundary regions.

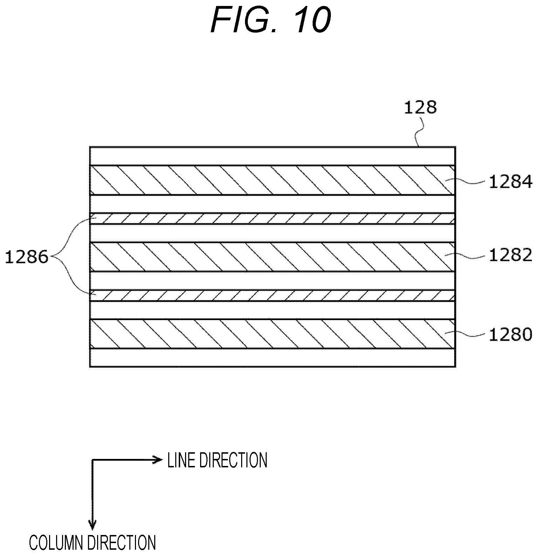

Fig. 10 is a diagram illustrating an example of ROI setting in the light-receiving region of the pixel array. In the pixel array 124, a region other than the light-receiving region 128 may be a light-shielded region. The boundary of the light-receiving region 128 can be set, for example, on the basis of a position and size of the filter portion 132, or can be set in the processing unit 106 or the processing device 22 on the basis of a light-receiving range after test light reception is actually performed.

In the light-receiving region 128, there are boundary regions 1286 to which the pixels 126 belongs on which light beams through the plurality of filters are incident as described above. Regions to which the pixels 126 belong that receive the light beams incident through the respective filters are set so as not to include the boundary regions 1286.

The light-receiving region 128 includes, for example, a first light-receiving region 1280 to which the pixels 126 belong that receive light through the first filter 134 illustrated in Fig. 7, a second light-receiving region 1282 to which the pixels 126 belong that receive light through the second filter 136, and a third light-receiving region 1284 to which the pixels 126 belong that receive light through the third filter 138.

As an example, in the light-receiving region 128, each light-receiving region is arranged such that the pixels 126 along one or a plurality of line directions belong to the light-receiving region. In these regions, the pixels 126 belonging to respective regions receive light beams of different wavelengths for the respective regions, or light beams of different wavelengths are incident. The pixels 126 belonging to respective regions generate and output analog signals based on received intensities, by the photoelectric conversion elements.

The light-receiving region corresponding to one filter may be, for example, a region for eight lines. This is a non-limiting example, and a light-receiving region corresponding to each filter may be set as a region including fewer lines or a region including more lines.

For example, the solid-state imaging device 10 acquires pieces of image information on a target (an object or the like including an organism) traveling in the column direction for respective bands in these regions. The acquired information is appropriately subjected to signal processing or image processing in the processing unit 106 and output.

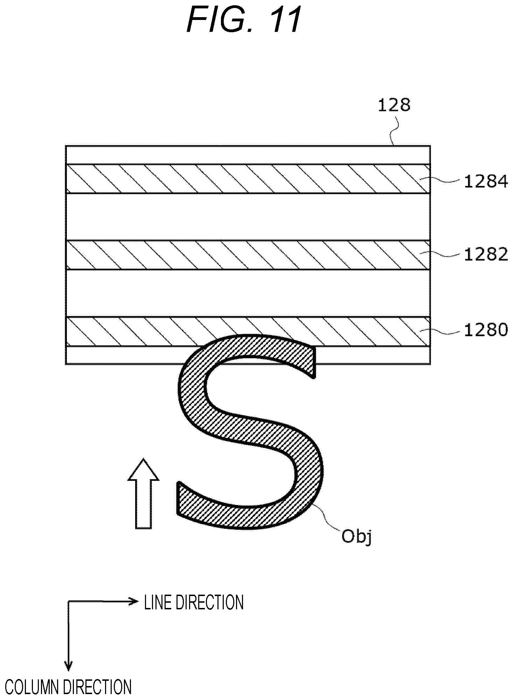

Figs. 11, 12, and 13 are diagrams illustrating examples of imaging of an object in each of light-receiving regions according to an embodiment. In these figures, an object Obj is illustrated as an image on the light-receiving surface of the sensor as an example.

Drawing of the boundary regions 1286 illustrated in Fig. 10 is omitted. The solid-state imaging device 10 acquires, for example, information on the object Obj, for each light-receiving region. The object Obj moves in the column direction as indicated by an outlined arrow in Fig. 11. In each light-receiving region, information is acquired at a corresponding acquisition timing (for example, a frame rate of light reception) of information in the pixel 126.

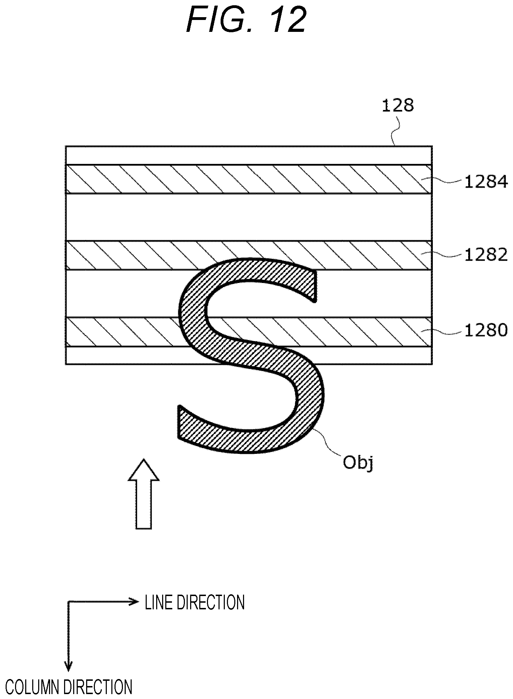

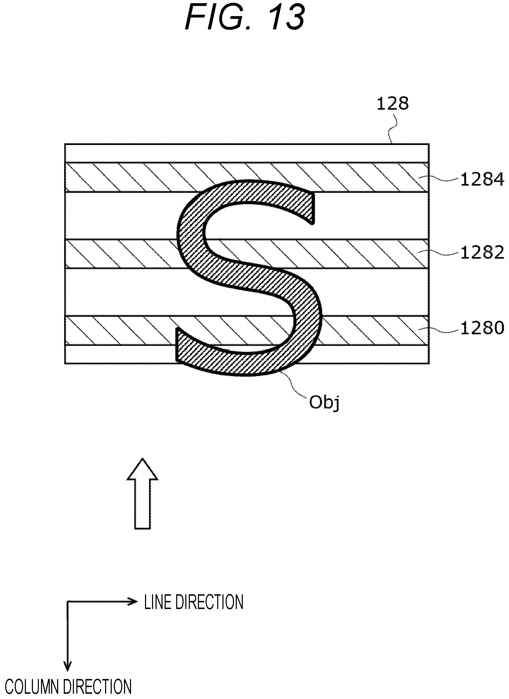

As illustrated in Fig. 11, for the object Obj traveling in the column direction, first, intensity information on reflected light or the like is acquired in the first light-receiving region 1280. After a lapse of a predetermined time, as illustrated in Fig. 12, for the object Obj traveling in the column direction, intensity information on reflected light or the like starts to be acquired in the second light-receiving region 1282. When a predetermined time has further elapsed from Fig. 12, as illustrated in Fig. 13, for the object Obj traveling in the column direction, intensity information on reflected light or the like starts to be acquired in the third light-receiving region 1284.

The information acquired in each light-receiving region may be stored in a storage area such as a buffer. For example, each light-receiving region operates as a light-receiving unit of a line scanner that stores the acquired information as time-series data and outputs an image by appropriately combining pieces of the time-series data. The combining of the pieces of time-series data may be performed by a combining method similar to that of a general line scanner.

In the present embodiment, the solid-state imaging device 10 can acquire three images indicating the intensities of light in different wavelength bands acquired from the three light-receiving regions by combining pieces of acquired time-series data in each of the first light-receiving region 1280, the second light-receiving region 1282, and the third light-receiving region 1284. These combinations may be executed by the imaging element 102 storing the time-series data in the storage unit 104 and the processing unit 106 combining the pieces of time-series data stored in the storage unit 104.

The solid-state imaging device 10 may output each of these pieces of combined image data of the respective wavelength bands. Furthermore, the solid-state imaging device 10 may output a result of signal processing or image processing of these pieces of combined image data individually or by using a plurality of pieces of the image data.

That is, the solid-state imaging device 10 can acquire and output an image in which information on the object moving along the column direction is corrected on the basis of signals acquired in the pixels 126 belonging to each region of the plurality of light-receiving regions.

The processing unit 106 can also correct a position of the image data acquired in each light-receiving region. For example, the processing unit 106 can acquire a moving speed of the object from the data acquired in the first light-receiving region 1280.

The processing unit 106 can correct time stamps of pieces of the time-series data acquired in the second light-receiving region 1282 and the third light-receiving region 1284 to match a time stamp of the time-series data acquired in the first light-receiving region 1280 on the basis of the speed and a span of information acquisition in the pixels 126 (for example, the frame rate).

As another example, the processing unit 106 can also correct a position along the column direction of the image data of the object reconstructed from the pieces of the time-series data acquired in the second light-receiving region 1282 and the third light-receiving region 1284 on the basis of the acquired speed information.

As another example, the speed along the column direction may be known. In this case, the processing unit 106 can correct a positional shift of the image acquired in each region by using the known speed information.

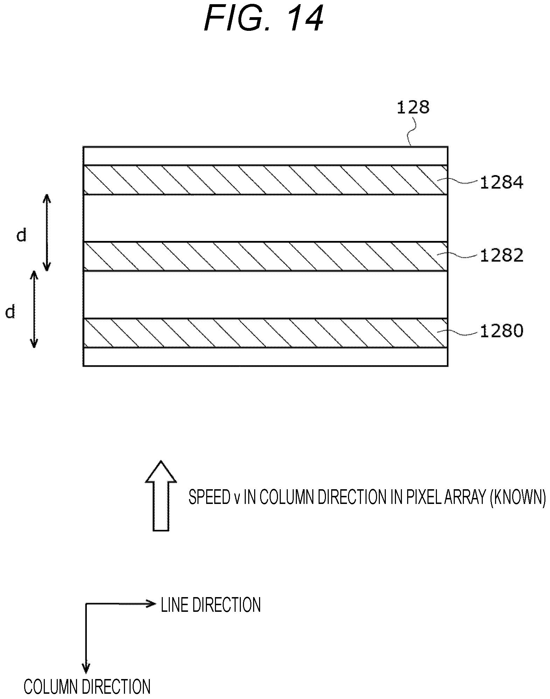

Fig. 14 is a diagram illustrating an example of a configuration of the light-receiving region according to an embodiment. It is assumed that a pitch d between the light-receiving regions and a speed v in the column direction are known. In this case, for example, the same region of the object acquired in each light-receiving region has a time shift of a predetermined time $t = d/v$. For this reason, the processing unit 106 can acquire a plurality of images in which the positional shift in the column direction is corrected by shifting the time-series data acquired from each light-receiving region by the predetermined time t or shifting the image data acquired from each light-receiving region by the number of frames corresponding to the predetermined time t. The number of frames corresponding to the predetermined time t may be set as F, and the speed v of movement of the target, the pitch d, and the frame rate may be set so that F is an integer value.

As described above, for the object acquired in the plurality of light-receiving regions, the processing unit 106 can acquire an image in which information on the object, for example, the position, is corrected on the basis of a time difference in acquiring the same region of the object. As a result, the solid-state imaging device 10 can acquire information on the object, for example, information in which the position is corrected, for each wavelength band.

In the light-receiving region 128, a distance (number of pixels) between the first light-receiving region 1280, the second light-receiving region 1282, and the third light-receiving region 1284 may be known. This known distance may be calculated from the configuration of the mask 130. In this case, it is possible to achieve more appropriate correction of the positional shift in the column direction from the speed information and the distance information.

In the above description, the solid-state imaging device 10 acquires pieces of image data from pieces of information in different wavelength bands acquired for respective light-receiving regions and outputs the image data, but operation in the present disclosure is not limited thereto. The processing unit 106 can further calculate and output predetermined indices on the basis of pieces of image data acquired from a plurality of wavelength bands. These indices may be statistical indices based on one or a plurality of pieces of image data.

As another example, the processing unit 106 can acquire pieces of image data of an NDWI, an NDVI, and the like, for example, and output the pieces of image data as predetermined indices. For example, the first filter may be a filter that transmits visible light, the second filter may be a filter that transmits light in the NIR band, and the third filter may be a filter that transmits light in the SWIR band. In this case, the solid-state imaging device 10 can appropriately acquire image data corresponding to red (RED) from the light received in the first light-receiving region 1280, acquire image data corresponding to the NIR band from the light received in the second light-receiving region 1282, and acquire image data corresponding to the SWIR band from the light received in the third light-receiving region 1284.

The processing unit 106 can combine images on the basis of the following expressions.

[Math. 1]

$$\mathrm{NDWI}_1 = \frac{\mathrm{RED} - \mathrm{SWIR}}{\mathrm{RED} + \mathrm{SWIR}} \quad (1)$$

[Math. 2]

$$\mathrm{NDWI}_2 = \frac{\mathrm{NIR} - \mathrm{SWIR}}{\mathrm{NIR} + \mathrm{SWIR}} \quad (2)$$

[Math. 3]

$$\mathrm{NDVI} = \frac{\mathrm{NIR} - \mathrm{RED}}{\mathrm{NIR} + \mathrm{RED}} \quad (3)$$

$\mathrm{NDWI}_1$ is a normalized water index on the ground surface, $\mathrm{NDWI}_2$ is a normalized water index on vegetation, and NDVI is a normalized vegetation index.

As described above, the solid-state imaging device 10 can also calculate and output the predetermined indices from the pieces of image data in the plurality of wavelength bands.

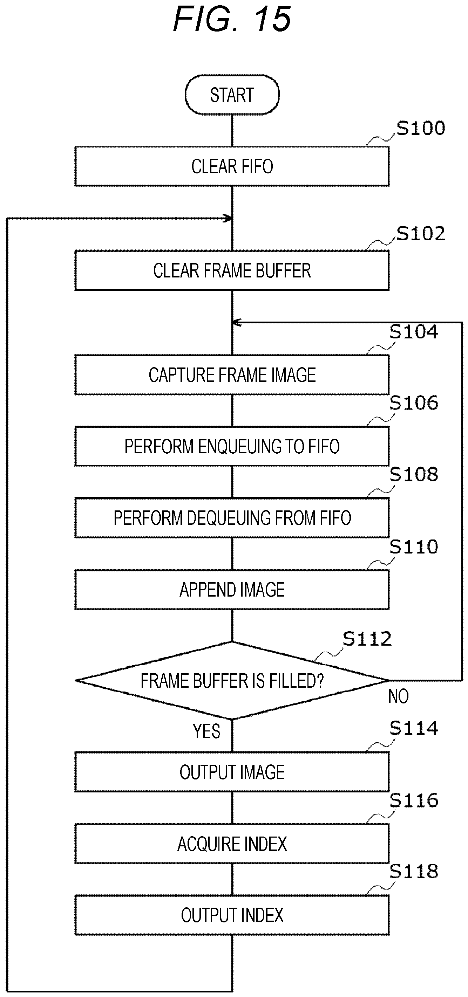

Fig. 15 is a flowchart illustrating an example of processing according to an embodiment. In this flowchart, as a non-limiting example, the distance between the light-receiving regions and the speed of the target in the column direction are known, but the present embodiment can also be applied to a case where the distance and the speed are not known as described above.

First, the processing unit 106 clears a FIFO used as a buffer (S100). In a case where the first light-receiving region 1280, the second light-receiving region 1282, and the third light-receiving region 1284, which are light-receiving regions for three bands, are included, the storage unit 104 includes, for example, a FIFO1 that stores data of the first light-receiving region 1280 and a FIFO2 that receives data of the second light-receiving region 1282. In a case where the number of bands desired to be acquired increases, it can be handled by increasing the number of FIFOs. The processing unit 106 initializes contents of the FIFOs for respective regions.

Next, the processing unit 106 clears a frame buffer (S102). The frame buffer is a buffer that stores data output from the pixels 126 belonging to the pixel array 124. The size of the frame buffer may be set according to the size of an image to be acquired. Furthermore, the frame buffer is included corresponding to each light-receiving region. In the above case, the storage unit 104 is included in frame buffers respectively corresponding to the first light-receiving region 1280, the second light-receiving region 1282, and the third light-receiving region 1284.

Next, the solid-state imaging device 10 captures a frame image (S104). This imaging is performed using a normal imaging method in the solid-state imaging device 10.

Next, the processing unit 106 executes synchronization processing (S106 to S110).

The processing unit 106 inputs the image data acquired in S104 to the FIFO (S106). The processing unit 106 enqueues data captured in the first light-receiving region 1280 in the FIFO1, and enqueues data captured in the second light-receiving region 1282 in the FIFO2, for example.

Next, the processing unit 106 dequeues pieces of data of the first light-receiving region 1280 and the second light-receiving region 1282 corresponding to data currently captured in the third light-receiving region 1284 from the FIFO (S108).

Note that, at the initial stage of imaging, this processing is omitted until appropriate past frame data is stored. For example, the processing unit 106 may not dequeue data from the FIFO2 until the captured data from F frames before is stored in the FIFO2, and may not dequeue data from the FIFO1 until the captured data from $2 \times F$ frames before is stored in the FIFO1. After an appropriate time (frame) has elapsed from the initial state, the processing unit 106 dequeues data at an appropriate timing from the FIFO1 and the FIFO2.

Next, the processing unit 106 appends data to the image (S110). The processing unit 106 appends data corresponding to the width of the light-receiving region from $2 \times F$ frames before acquired from the FIFO1 to the frame buffer that stores the image data of the first light-receiving region 1280, for example. Similarly, the processing unit 106 appends the data corresponding to the width of the light-receiving region from F frames before acquired from the FIFO2 to the frame buffer that stores the image data of the second light-receiving region 1282, and appends the currently acquired image data in the third light-receiving region 1284 to the frame buffer that stores the image data of the third light-receiving region 1284, for example.

Note that, at this timing, in a case where there is an overlapping region between the data to be appended and the data to which appending is performed, the processing unit 106 may execute calculation for overlapping these overlapping regions appropriately.

After appending the image data, the processing unit 106 determines whether or not the frame buffers for the respective light-receiving regions are filled (S112). In a case where the frame buffers are filled (S112: YES), the processing unit 106 outputs pieces of image data for frames to the storage unit 104 or the storage device 20 (S114).

Note that, since there is a difference of 2F frames between the third light-receiving region 1284 and the first light-receiving region 1280 and there is a difference of F frames between the third light-receiving region 1284 and the second light-receiving region 1282, outputs from the respective frame buffers may be executed at shifted timings.

Moreover, after this processing, for each light-receiving region, processing may be performed with the timing from subsequent S102 appropriately shifted. For example, the image data from the third light-receiving region 1284 may be output, the frame buffer for the third light-receiving region 1284 may be cleared, and after F frames, output of the image data from the second light-receiving region 1282 and clearing of the frame buffer may be executed, and further, after F frames, output of the image data from the first light-receiving region 1280 and clearing of the frame buffer may be executed. That is, the branching of S112 may be determined for each light-receiving region.

The solid-state imaging device 10 may repeat the processing from S102 to S114 as many times as necessary. Furthermore, the processing of S116 and S118 is not essential in the case of acquiring image data for each band, for example, and may be arbitrarily executed. In a case where the processing up to the output of the index is executed by the solid-state imaging device 10, the processing of S116 and S118 is executed as follows.

In a case where the output of the index is necessary, the processing unit 106 executes calculation relating to the index. The processing unit 106 executes calculations corresponding to the above expressions (1), (2), and (3) in units of image frames, for example (S116).

Then, the solid-state imaging device 10 outputs the index acquired in S116 (S118). As described above, pieces of the image data acquired for respective light-receiving regions may be output, or some index that can be acquired from these images may be calculated inside and outside the chip and output. Of course, the image data for each light-receiving region and the index data may be output together.

As described above, according to the solid-state imaging device 10 or the solid-state imaging system 1 according to the present embodiment, by arranging an appropriate filter for an image sensor already manufactured and executing an appropriate calculation, it is possible to implement a line scan camera enabled to cover a multispectral or hyperspectral band without performing control by a large housing and an expensive module.

When the storage area is set according to the above, a capacity for storing data for a plurality of frames is necessary, but for example, the image data does not have to be stored for other regions other than the first light-receiving region 1280, the second light-receiving region 1282, and the third light-receiving region 1284 in the pixel array 124. For this reason, since the solid-state imaging device 10 can use the frame buffer or the like originally used for these other regions as a necessary storage area as necessary, it is also possible to secure a sufficient storage capacity even in conventional configurations by appropriately setting the size of the light-receiving region.

Note that, in order to maintain the speed in the column direction at a predetermined speed, a movable stage may be included.

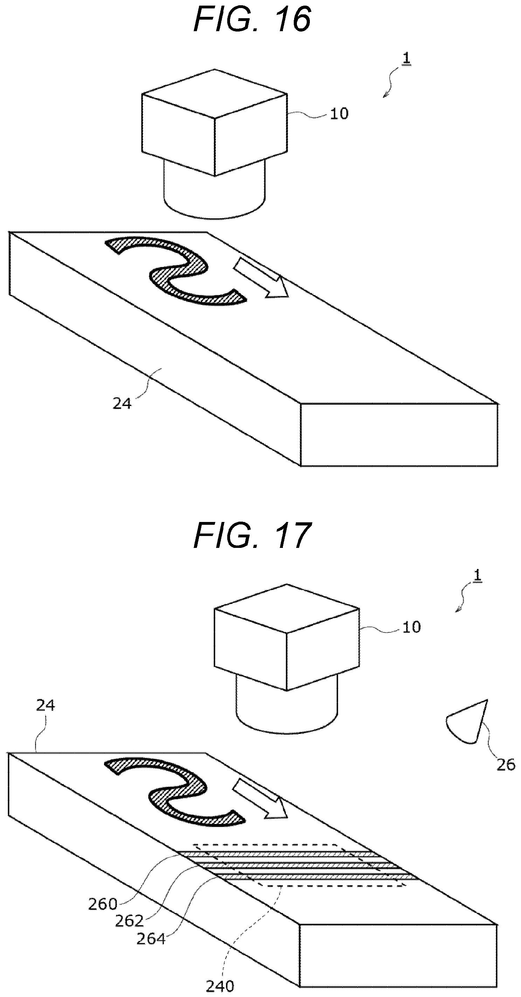

Fig. 16 is a diagram schematically illustrating an example of the solid-state imaging system 1 according to an embodiment. The solid-state imaging system 1 may further include a stage 24. Although the storage device 20 and the processing device 22 are not illustrated in Fig. 16, these components may be included as necessary. For example, a speed or the like of the stage may be controlled by the processing device 22.

The stage 24 is a movable stage that moves a target placed on the upper surface in a predetermined direction at a predetermined speed. The stage 24 may be a stage that moves in a direction of one axis. The solid-state imaging device 10 may be installed such that the direction of one axis of the stage 24 is the column direction.

The processing unit 106 or the processing device 22 can appropriately define the number of frames F described above on the basis of a distance between the imaging surface (the light-receiving surface of the pixel 126) of the solid-state imaging device 10 and the upper surface of the stage 24, a pitch of the pixels 126, and a moving speed of the upper surface of the stage 24. Furthermore, as described above, any of these parameters can be changed as necessary so that F is an integer.

(Second Embodiment)

In the first embodiment described above, an aspect has been described in which the filter is included in the solid-state imaging device 10 to change the band of transmitted light; however, it is also possible to perform implementation without including the filter in the solid-state imaging device 10.

Fig. 17 is a diagram schematically illustrating an example of the solid-state imaging system according to an embodiment. The solid-state imaging system 1 may include the solid-state imaging device 10, the stage 24, and a light source 26. Similarly to the case of Fig. 16, the solid-state imaging system 1 may include at least one of the storage device 20 or the processing device 22 as necessary.

The light source 26 generates a region for each wavelength band in which information is desired to be acquired on the upper surface of the stage 24 (surface to be imaged by the solid-state imaging device 10). The light source 26 forms, for example, a first irradiation region 260, a second irradiation region 262, and a third irradiation region 264 on the upper surface of the stage 24. In the case of using an example similar to the example described above, the light source 26 forms the first irradiation region 260 irradiated with visible light, the second irradiation region 262 irradiated with light in the NIR wavelength band, and the third irradiation region 264 irradiated with light in the SWIR wavelength band by irradiating the stage with light beams corresponding to the respective bands.

Note that, although only one light source 26 is illustrated, the present embodiment is not limited thereto. The irradiation region may be enabled to be appropriately defined by a plurality of the light sources 26.

The solid-state imaging device 10 is arranged so that information on these regions can be appropriately acquired in a predetermined region of the pixel array 124. For example, the solid-state imaging device 10 is arranged such that an imaging range in the predetermined region in the pixel array 124 is an imaging range 240 indicated by a dotted line. Furthermore, such an imaging range 240 may be set by adjusting the optical system 100 and the like of the solid-state imaging device 10 together with the arrangement of the solid-state imaging device 10.

The solid-state imaging device 10 sets light-receiving ranges for the respective irradiation regions in the pixel array 124 as the light-receiving regions in the first embodiment. With this setting, the solid-state imaging device 10 can appropriately acquire image data for each wavelength band by performing processing similar to that in Fig. 15.

As described above, according to the present embodiment, it is possible to implement a similar operation even in an aspect in which a change such as mounting a filter or the like is not made for the configuration of the solid-state imaging device 10.

The embodiments described above may have the following modes.

(1) A solid-state imaging device including:

a sensor that includes light-receiving elements in a two-dimensional array along a first direction and a second direction intersecting the first direction and in which a plurality of regions is arranged, in which the regions are arranged along the first direction and respectively receives light beams having different wavelengths or light beams having different wavelengths are respectively incident on the regions; and
a signal processing circuit that acquires an image in which information on an object moving along the second direction is corrected on the basis of signals acquired in the light-receiving elements to which each region of the plurality of regions belongs.

(2) The solid-state imaging device according to (1), in which
the signal processing circuit acquires an image in which a positional shift of the object along the second direction is corrected on the basis of captured images regarding wavelengths acquired from the plurality of regions.

(3) The solid-state imaging device according to (1) or (2), in which
a plurality of filters having transmission characteristics in different wavelength regions is arranged along the first direction on a light-receiving surface side of the sensor to form the plurality of regions in the sensor.

(4) The solid-state imaging device according to (3), in which
the plurality of filters is attachable to and detachable from the sensor.

(5) The solid-state imaging device according to (3) or (4), in which
in a light-receiving surface of the sensor, a region on which light through one of the plurality of filters is incident is set as the plurality of regions.

(6) The solid-state imaging device according to any of (1) to (5), in which
the signal processing circuit acquires the image in which the information on the object is corrected on the basis of a time difference in acquiring an identical region in the object in the plurality of regions.

(7) The solid-state imaging device according to any of (1) to (6), in which

the signal processing circuit outputs an image for a wavelength of each of the plurality of regions corrected.

(8) The solid-state imaging device according to any of (1) to (7), in which

the signal processing circuit calculates and outputs a predetermined index, from an image for a wavelength of each of the plurality of regions corrected.

(9) The solid-state imaging device according to (8), in which

the predetermined index is a normalized difference water index (NDWI) or a normalized difference vegetable index (NDVI).

(10) The solid-state imaging device according to any of (1) to (9), in which

at least a region that receives a wavelength in a visible light region, a region that receives a wavelength in a near-infrared region, and a region that receives a wavelength in a short wavelength infrared region are included as the plurality of regions.

(11) The solid-state imaging device according to any of (1) to (10), in which

the sensor and the signal processing circuit are included in an identical chip.

(12) A solid-state imaging system including:

the solid-state imaging device according to any of (1) to (11); and

a stage enabled to move an object in the second direction, in which

an image of the object moving with the stage is captured by using the solid-state imaging device, and a captured image of the object for each wavelength is acquired.

(13) The solid-state imaging system according to (12) that is not depend on any of (3) to (5), further including

a light source that emits light of a plurality of wavelengths to predetermined regions along the first direction, in which

reflected light or transmitted light of the light emitted from the light source is received in each region of the plurality of regions arranged in the sensor.

Aspects of the present disclosure are not limited to the above-described embodiments, and include various conceivable modifications, and the effects of the present disclosure are not limited to the above-described contents. The components in each of the embodiments may be appropriately combined and applied. That is, various additions, modifications, and partial deletions can be made without departing from the conceptual idea and gist of the present disclosure derived from the contents defined in the claims and equivalents and the like thereof.

REFERENCE SIGNS LIST

| | |
|---|---|
| 1 | Solid-state imaging system |
| 10 | Solid-state imaging device |
| 100 | Optical system |
| 102 | Imaging element |
| 120 | Vertical drive circuit |
| 122 | Horizontal drive circuit |
| 124 | Pixel array |
| 126 | Pixel |
| 128 | Light-receiving region |
| 1280 | First light-receiving region |
| 1282 | Second light-receiving region |
| 1284 | Third light-receiving region |
| 1286 | Boundary region |
| 130 | Mask |
| 132 | Filter portion |
| 134 | First filter |
| 136 | Second filter |
| 138 | Third filter |
| 140 | Light-shielding portion |
| 104 | Storage unit |
| 106 | Processing unit |
| 108 | I/F |
| 20 | Storage device |
| 22 | Processing device |
| 24 | Stage |
| 240 | Imaging range |
| 26 | Light source |
| 260 | First irradiation region |
| 262 | Second irradiation region |
| 264 | Third irradiation region |
| 30 | Substrate |
| 32 | First substrate |
| 34 | Second substrate |
| 300 | Pixel region |
| 302 | Control circuit |
| 304 | Logic circuit |

**Claims**

1. A solid-state imaging device comprising:

a sensor that includes light-receiving elements in a two-dimensional array along a first direction and a second direction intersecting the first direction and in which a plurality of regions is arranged, wherein the regions are arranged along the first direction and respectively receives light beams having different wavelengths or light beams having different wavelengths are respectively incident on the regions; and

a signal processing circuit that acquires an image in which information on an object moving along the second direction is corrected on a basis of signals acquired in the light-receiving elements to which each region of the plurality of regions belongs.

2. The solid-state imaging device according to claim 1, wherein
the signal processing circuit acquires an image in which a positional shift of the object along the second direction is corrected on a basis of captured images regarding wavelengths acquired from the plurality of regions.

3. The solid-state imaging device according to claim 1, wherein
a plurality of filters having transmission characteristics in different wavelength regions is arranged along the first direction on a light-receiving surface side of the sensor to form the plurality of regions in the sensor.

4. The solid-state imaging device according to claim 3, wherein
the plurality of filters is attachable to and detachable from the sensor.

5. The solid-state imaging device according to claim 3, wherein
in a light-receiving surface of the sensor, a region on which light through one of the plurality of filters is incident is set as the plurality of regions.

6. The solid-state imaging device according to claim 1, wherein
the signal processing circuit acquires the image in which the information on the object is corrected on a basis of a time difference in acquiring an identical region in the object in the plurality of regions.

7. The solid-state imaging device according to claim 1, wherein
the signal processing circuit outputs an image for a wavelength of each of the plurality of regions corrected.

8. The solid-state imaging device according to claim 1, wherein
the signal processing circuit calculates and outputs a predetermined index, from an image for a wavelength of each of the plurality of regions corrected.

9. The solid-state imaging device according to claim 8, wherein
the predetermined index is a normalized difference water index (NDWI) or a normalized difference vegetable index (NDVI).

10. The solid-state imaging device according to claim 1, wherein
at least a region that receives a wavelength in a visible light region, a region that receives a wavelength in a near-infrared region, and a region that receives a wavelength in a short wavelength infrared region are included as the plurality of regions.

11. The solid-state imaging device according to claim 1, wherein
the sensor and the signal processing circuit are included in an identical chip.

12. A solid-state imaging system comprising:

the solid-state imaging device according to claim 1; and
a stage enabled to move an object in the second direction, wherein
an image of the object moving with the stage is captured by using the solid-state imaging device, and a captured image of the object for each wavelength is acquired.

13. The solid-state imaging system according to claim 12, further comprising

a light source that emits light of a plurality of wavelengths to predetermined regions along the first direction, wherein
reflected light or transmitted light of the light emitted from the light source is received in each region of the plurality of regions arranged in the sensor.

# FIG. 1

TARGET

1

10

100 OPTICAL SYSTEM

102 IMAGING ELEMENT

104 STORAGE UNIT

106 PROCESSING UNIT

108 I/F

20 STORAGE DEVICE

22 PROCESSING DEVICE

# FIG. 2

HORIZONTAL DRIVE CIRCUIT

VERTICAL DRIVE CIRCUIT

PROCESSING UNIT ⌐106

## FIG. 3

## FIG. 4

# FIG. 5

32

300

34

302

304

# FIG. 6

130

132

140

→ LINE DIRECTION

↓ COLUMN DIRECTION

## FIG. 7

132

138

136

134

## FIG. 8

132

138

140

136

134

# FIG. 9

LINE DIRECTION

COLUMN DIRECTION

# FIG. 10

128

1284

1286

1282

1280

→ LINE DIRECTION

↓ COLUMN DIRECTION

# FIG. 11

128

1284

1282

1280

Obj

LINE DIRECTION

COLUMN DIRECTION

# FIG. 12

128

1284

1282

1280

Obj

LINE DIRECTION

COLUMN DIRECTION

# FIG. 13

128

1284

1282

1280

Obj

LINE DIRECTION

COLUMN DIRECTION

# FIG. 14

128

1284

1282

1280

d

d

SPEED v IN COLUMN DIRECTION IN PIXEL ARRAY (KNOWN)

LINE DIRECTION

COLUMN DIRECTION

# FIG. 15

START

S100
CLEAR FIFO

S102
CLEAR FRAME BUFFER

S104
CAPTURE FRAME IMAGE

S106
PERFORM ENQUEUING TO FIFO

S108
PERFORM DEQUEUING FROM FIFO

S110
APPEND IMAGE

S112
FRAME BUFFER IS FILLED?

NO

YES

S114
OUTPUT IMAGE

S116
ACQUIRE INDEX

S118
OUTPUT INDEX

## FIG. 16

## FIG. 17

| INTERNATIONAL SEARCH REPORT | International application No. |
|---|---|
| | PCT/JP2023/017598 |

**A. CLASSIFICATION OF SUBJECT MATTER**

*H04N 23/54*(2023.01)i; *H04N 23/60*(2023.01)i
FI: H04N23/54; H04N23/60 500

According to International Patent Classification (IPC) or to both national classification and IPC

**B. FIELDS SEARCHED**

Minimum documentation searched (classification system followed by classification symbols)

H04N23/54; H04N23/60

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2017-208813 A (ASIA AIR SURVEY CO., LTD.) 24 November 2017 (2017-11-24) paragraphs [0036], [0039], [0045]-[0060], [0088]-[0108], [0115], [0116], [0183], [0209], fig. 1-3 | 1-3, 5-7, 11 |
| Y | | 4, 8-10 |
| X | US 2018/0204863 A1 (IMEC VZW) 19 July 2018 (2018-07-19) paragraphs [0025], [0026], [0028], [0037], [0038], [0043], [0045], [0087]-[0106], [0147]-[0156], fig. 1 | 1-3, 5-7, 11 |
| Y | | 4, 8-10 |
| X | JP 2021-48464 A (SONY SEMICONDUCTOR SOLUTIONS CORP.) 25 March 2021 (2021-03-25) paragraphs [0020]-[0076], fig. 1-6, 9, 10 | 1-3, 5-7, 11-13 |
| Y | | 4, 8-10 |
| Y | JP 2013-3159 A (OLYMPUS CORP.) 07 January 2013 (2013-01-07) paragraph [0084] | 4 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 July 2023** | **25 July 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

| International application No. |
| --- |
| **PCT/JP2023/017598** |

### C.   DOCUMENTS CONSIDERED TO BE RELEVANT

| Category* | Citation of document, with indication, where appropriate, of the relevant passages | Relevant to claim No. |
| --- | --- | --- |
| Y | WO 2021/100426 A1 (SONY GROUP CORP.) 27 May 2021 (2021-05-27)<br>paragraphs [0030], [0031] | 8-10 |
| Y | JP 2019-129178 A (SONY SEMICONDUCTOR SOLUTIONS CORP.) 01 August 2019 (2019-08-01)<br>paragraphs [0298], [0299] | 8-10 |

Form PCT/ISA/210 (second sheet) (January 2015)

## INTERNATIONAL SEARCH REPORT
### Information on patent family members

| International application No. |
| --- |
| **PCT/JP2023/017598** |

| Patent document cited in search report | | | Publication date (day/month/year) | Patent family member(s) | | | Publication date (day/month/year) |
| --- | --- | --- | --- | --- | --- | --- | --- |
| JP | 2017-208813 | A | 24 November 2017 | JP | 2018-61262 | A | |
| | | | | WO | 2017/195858 | A1 | |
| US | 2018/0204863 | A1 | 19 July 2018 | EP | 3348974 | A1 | |
| JP | 2021-48464 | A | 25 March 2021 | US | 2022/0390383 | A1 | |
| | | | | paragraphs [0064]-[0149], fig. 1-6, 9, 10 | | | |
| | | | | WO | 2021/054198 | A1 | |
| | | | | CN | 114175615 | A | |
| JP | 2013-3159 | A | 07 January 2013 | (Family: none) | | | |
| WO | 2021/100426 | A1 | 27 May 2021 | US | 2022/0408068 | A1 | |
| | | | | paragraphs [0157], [0158] | | | |
| JP | 2019-129178 | A | 01 August 2019 | US | 2021/0066356 | A1 | |
| | | | | paragraphs [0381], [0382] | | | |
| | | | | WO | 2019/142687 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013238579 A